# EUROPEAN PATENT APPLICATION

(11) **EP 2 468 112 A1**
(43) Date of publication of application: **27.06.2012**
(21) Application number: 10196402.1
(22) Date of filing: 22.12.2010
(51) Int. Cl.: A23L 1/303, A23L 1/162

(54) **Short cooking dry pasta, its use and process for the preparation**

(71) Applicant: Nestec S.A., 1800 Vevey (CH)
(72) Inventor: Battaini, Giuseppe, 78467, KONSTANZ (DE)

(57) **Abstract**

The present invention concerns a short cooking dry pasta composition, comprising wheat semolina, egg, ascorbic acid, at least 7 % carrot juice concentrate, between 0.5 and 10 % of water, wherein the total carotenoids content consists of at least 100 ppm. The invention concerns further the process for the preparation of said composition.

## Description

### Field of the invention

The present invention concerns a short cooking dry pasta composition , as well as the use of said composition and the process for the manufacture of the composition.

### Background of the invention

The objective of the present invention is to bring on the market a quick cooking dry pasta composition containing carrot vegetables. It is already known to incorporate vegetable powder in pasta : this addition would bring about 50 % of general insoluble material coming from the vegetable structure. Like that it is difficult to incorporate enough powder in order to have high amount of active substances included in the matrix (max 30 ppm total carotenoids as best case scenario). Additionally the vegetable powder undergoes a double drying treatment which increases the total carotenoids oxidation losses. Vegetable and fruit juices are commonly added already to pasta in limited amounts solely for coloring purpose. The EP patent 117'955 concerns a pasta food such as macaroni, spaghetti and the like which have color and aroma of specified natural fruit. Any type of fruit juice such as concentrated juice, powdered juice, pastes, purée, etc., are useful for this purpose. The FR patent 2904193 concerns a gelified food product comprising a main ingredient taken in the group consisting of vegetables, fruits, juices of vegetable origin and a cold gelifying agent as well as a hot gelifying agent : in this case the product has a high water content and has to be preserved chilled.

### Summary of the invention

According to the invention, as mentioned above, the objective is to offer to the consumer a dry pasta composition. Another objective is that this composition is a short cooking dry pasta. The fact of obtaining a short cooking pasta is related with the process carried out to produce such composition. A further objective is to have a pasta composition comprising protected vitamin A.

The present invention concerns a short cooking dry pasta composition, comprising wheat semolina, egg, ascorbic acid, at least 7 % carrot juice concentrate, between 0.5 and 10 % of water, wherein the total carotenoids content consists of at least 100 ppm.

The invention concerns further Method for making instant pasta comprising the steps of:
a. Mixing wheat semolina with a mixture comprising at least 8 % carrot juice concentrate, at least 3% of whole egg and ascorbic acid,
b. Extruding the mixture through an extrusion die to having extruded mass,
c. Pre-cooking the extruded mass to give a short cooking pasta and
d. Drying the pasta at a water content comprised between 0.5 and 10 %.

### Detailed description of the invention

It is known that in developing and developed countries often consumers do not manage to have enough of vitamins like vitamin A. The lack of vitamin A can cause serious illnesses, like blindness. Supplementation via artificial enrichment is a possible solution, however, considering the overall dietary/nutritional balance impact and also the general consumer perception, a natural delivery is generally preferred. The lack of convenient, tasty and affordable way to deliver natural pro vitamin A is one of the possible causes of their limited dietary intake.

In specific population clusters, like for example for children also in developed countries, the consumption of fresh vegetable is particularly limited.

Dry short cooking pasta is convenient and popular food category. Children in particular are extremely attracted by coloured pasta with different shapes. However, there is not available yet a technological solution which can easily incorporate and protect in a quick cooking and shelf stable pasta the right and stable amount of carrot pro vitamin A (i.e. carotenoids) to create a sensory appealing combination. According to the invention, it is possible to reach both objectives: having a short cooking dry pasta and simultaneously reaching a high level of pro vitamin A.

The present invention concerns a short cooking dry pasta composition, comprising wheat semolina, egg, ascorbic acid, at least 7 % carrot juice concentrate, between 0.5 and 10 % of water, wherein the total carotenoids content consists of at least 100 ppm. The presence of ascorbic acid in the composition is necessary, because it increases the oxidation stability of the carotenoids in a dry matrix

The amount of ascorbic acid is not critical, but normally it is present in an amount of at least 80 ppm. Preferably, the ascorbic acid content in the final composition is comprised between 100 and 140 ppm. In the present specification, all the % are given in weight.

In the composition of the invention, the carrot juice concentrate has a dry matter content of at least 40 %, preferably of at least 60 %. The final total carotenoid content is preferably comprised between 120 and 160 ppm. The total carotenoids are measured according to the international standard method DIN EN 12823-2 modified. The actives are measured via photometry instead of HPLC as it is described in the DIN method. The pasta is treated via cold alkaline hydrolysis and with methanolic potassium hydroxide (KOH) extraction with hexane. The photometric determination in hexane is done at 450 nm (total carotenoids).

The ascorbic acid can be of not natural origin, but preferably it is coming of natural origin.The ascorbic acid comes from an extract from a natural source taken in the group consisting of Kakadu plum, Camu Camu, Rose hip, Acerola, Seabuckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry.

The wheat semolina used is preferably wheat durum semolina. The reason is that its high protein and gluten content, as well as its strength make durum good for extruded product such as pasta. The water content in the final composition is preferably below 10 %.

According to another feature of the invention, the composition contains further ingredients selected from gluten, wholebran from cereals such as wheat or oat.

The short cooking dry pasta of the invention can be used per se, but usually it is present in a shelf stable dehydrated composition in an amount comprised between 5 and 95 %. For example, it can be part of a dehydrated soup or a pasta based meal.

The present invention concerns also the use of a dry pasta in a food composition for naturally supplementing pro-vitamin A upon consumption of said dry pasta. Furthermore, the invention concerns the use of the dry pasta, wherein the dry pasta is a natural pro-vitamin A carrier in the final food composition.

The present invention concerns further a method for making instant pasta comprising the steps of:
a. Mixing wheat semolina with a mixture comprising at least 8 % carrot juice concentrate, at least 3% of whole egg and ascorbic acid ,
b. Extruding the mixture through an extrusion die to having extruded mass,
c. Pre-cooking the extruded mass to give a short cooking pasta and
d. Drying the pasta at a water content comprised between 0.5 and 10 %.

According to the invention, the amount of wheat semolina is of at least 70%. And preferably, the wheat semolina is wheat durum semolina.

The ascorbic acid come from a not natural origin or a natural origin. Preferably it comes from an extract from a natural source taken in the group consisting of Kakadu plum, Camu Camu, Rose hip, Acerola, Seabuckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry.

The carrot juice is a concentrate presenting at least 40 % dry matter, preferably 60 % dry matter.

The amount of ascorbic acid present in the mixture is comprised between 0.01 and 0.1 %. The amount of carrot juice in the mixture is comprised between 9 and 12 %.

The extruding step is normally carried out at room temperature. The pre-cooking is carried out by boiling or steaming the extruded mass for less than 10 minutes. Preferably, the precooking is carried out in 5 minutes.

The final amount in the dry pasta of carotenoids is of at least 100 ppm.

### Examples

72 kg of wheat durum semolina is mixed with 9 kg of carrot juice concentrate, 4 kg of liquid egg, 15 kg of water and 20 g of ascorbic acid. The carrot juice used has a dry content of 60 %. The obtained mixture is extruded and is steam cooked during 5 minutes. The obtained pasta is finally dried to a water content of 6 %.

The final dry pasta has following composition:

| | |
|---|---|
| Wheat durum semolina | 85 % |
| Carrot juice | 8 % |
| Liquid egg | 1 % |
| Ascorbic acid | 0.01 % |

## Claims

1. Short cooking dry pasta composition, comprising wheat semolina, egg, ascorbic acid, at least 7 % carrot juice concentrate, between 0.5 and 10 % of water, wherein the total carotenoids content consists of at least 100 ppm.

2. Pasta composition according to claim 1 or 2, wherein the composition comprises at least 80 ppm of ascorbic acid, preferably between 100 and 140 ppm.

3. Pasta composition according to any of claims 1 to 3, wherein the amount of total carotenoids is comprised between 120 and 160 ppm.

4. Pasta composition according to claim 3, wherein the ascorbic acid come from an extract from a natural source taken in the group consisting of Kakadu plum, Camu Camu, Rose hip, Acerola, Seabuckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry.

5. Pasta composition according to any of claims 1 to 5, wherein said composition comprises as wheat semolina wheat durum semolina.

6. Pasta composition according to any of claims 1 to 6 having a water content of at most 10%.

7. Pasta composition according to any of the preceding claims, wherein said composition comprises further ingredients selected from gluten, wholebran from cereals such as wheat and oat.

8. Shelf stable dehydrated food composition comprising short cooking dry pasta according to any of the preceding claims in an amount comprised between 5 and 95 %.

9. Shelf stable dehydrated food composition according to claim 9, which is selected from soup or pasta-based meal.

10. Use of a pasta composition according to any of claims 1 to 8 in a food composition for naturally supplementing pro-vitamin A upon consumption of said food composition.

11. Use of pasta composition according to claim 11, wherein the pasta composition is a natural pro-vitamin A carrier in the food composition.

12. Method for making instant pasta comprising the steps of:
a. Mixing wheat semolina with a mixture comprising at least 8 % carrot juice concentrate, at least 3% of whole egg and ascorbic acid ,
b. Extruding the mixture through an extrusion die to having extruded mass,
c. Pre-cooking the extruded mass to give a short cooking pasta and
d. Drying the pasta at a water content comprised between 0.5 and 10 %.

13. Method according to claim 13, wherein the instant pasta comprises at least at least 70% wheat durum semolina.

14. Method according to claims 13, wherein the extruding step is carried out at room temperature.

15. Method according to any of claims 13, wherein the pre-cooking is carried out by boiling or steaming the extruded mass for less than 10 minutes.

16. Method according to any of claims 13 to 16, wherein the amount of carrot juice is comprised between 9 and 12 % the amount of ascorbic acid present in the mixture is comprised between 0.01 and 0.1 %.

17. Method according to any of claims 12 to 16, wherein the ascorbic acid come from an extract from a natural source taken in the group consisting of Kakadu plum, Camu Camu, Rose hip, Acerola, Seabuckthorn, Jujube, Indian gooseberry, Baobab, Hot Chillis, Blackcurrant, Red pepper, Parsley, Guava, Kiwifruit, Broccoli, Loganberry, Redcurrant, Brussels sprout, Wolfberry

18. Method according to any of claims 12 to 17, wherein the final amount of carotenoids consists of at least 100 ppm.
